# EUROPEAN PATENT SPECIFICATION

(11) **EP 3 809 262 B1**
(45) Date of publication and mention of the grant of the patent: **29.11.2023**
(21) Application number: 19203385.0
(22) Date of filing: 15.10.2019
(51) Int. Cl.: G06F 9/455, G06F 9/4401

(54) **METHOD FOR CONFIGURING A HYPERVISOR AND INDUSTRIAL PC**
VERFAHREN ZUR KONFIGURATION EINES HYPERVISORS UND EINES INDUSTRIE-PCS
PROCÉDÉ POUR CONFIGURER UN HYPERVISEUR ET PC INDUSTRIEL

(43) Date of publication of application: 21.04.2021
(73) Proprietor: Omron Corporation, Kyoto-shi, Kyoto 600-8530 (JP)
(72) Inventor: Scheffer, Fred, 5234 GM 's-Hertogenbosch (NL); Van Zuylen, Lucas, 5234 GM 's-Hertogenbosch (NL); Van Son, Justin, 5234 GM 's-Hertogenbosch (NL)
(74) Representative: Horn Kleimann Waitzhofer Schmid-Dreyer Patentanwälte- und Rechtsanwälte PartG mbB

(56) References cited:
- EP-A1- 3 267 649
- US-A1- 2007 180 454
- US-A1- 2009 228 884
- US-A1- 2012 060 168
- Anonymous: "BIOS - Wikipedia", , 22 June 2016 (2016-06-22), XP055830640, Retrieved from the Internet: URL:https://en.wikipedia.org/w/index.php?t itle=BIOS&oldid=726438579 [retrieved on 2021-08-06]
- Anonymous: "Industrial PC - Wikipedia", , 3 April 2019 (2019-04-03), pages 1-3, XP055840286, Retrieved from the Internet: URL:http://web.archive.org/web/20190403161 100/https://en.wikipedia.org/wiki/Industri al_PC [retrieved on 2021-09-13]
- Anonymous: "Booting - Wikipedia", , 28 November 2016 (2016-11-28), XP055690318, Retrieved from the Internet: URL:https://en.wikipedia.org/w/index.php?t itle=Booting&oldid=751994168 [retrieved on 2020-04-29]
- Anonymous: "VMware ESX - Wikipedia, the free encyclopedia", , 3 May 2016 (2016-05-03), pages 1-11, XP093003665, Retrieved from the Internet: URL:https://web.archive.org/web/2016050312 4128/https://en.wikipedia.org/wiki/VMware_ ESXi [retrieved on 2022-11-30]
- Anonymous: "How does the OS know where the hardware is", , 9 May 2017 (2017-05-09), pages 1-2, XP093003669, Retrieved from the Internet: URL:https://web.archive.org/web/2017050915 0801/http://gauss.ececs.uc.edu/Courses/c40 29/extra/whereisstuff.html [retrieved on 2022-11-30]

## Description

The present invention relates to a method for configuring a hypervisor in an industrial PC and to an industrial PC.

In the past, industrial PCs having a general-purpose operating system (GPOS) and a real-time operating system (RTOS) have been used. The GPOS and the RTOS may share the same hardware and the resources can be managed by a hypervisor. Depending on the activities performed by the industrial PC, the resources required by the RTOS and the GPOS may vary. It is desirable to adapt the resources respectively allocated to the RTOS and to the GPOS to optimize a performance of the industrial PC.

US 2012/060168 A1 discloses a virtualization system for supporting at least two operating systems and a resource allocation method of the virtualization system. The method includes allocating resources to the operating systems, calculating, when one of the operating systems is running, workloads for each operating system, and adjusting resources allocated to the operating systems according to the calculated workloads. The workloads of a plurality of operating systems running in the virtualization system are determined and time resources are allocated dynamically according to the variation of the workloads.

EP 3 267 649 A1 discloses a method for performing a secure communication between a real-time operating system and a general purpose operating system, wherein the real-time operating system and the general purpose operating system are provided in a single computing apparatus and are separated by a virtual machine monitor, wherein the real-time operating system comprises a first open platform communications interface and the general purpose operating system comprises a second open platform communications interface.

It is one object of the present invention to provide an improved method for configuring a hypervisor in an industrial PC. Another object of the present invention is the provision of an improved industrial PC.

The invention is defined by the independent claims. Specific embodiments are defined by dependent claims. I In particular, according to a first aspect, there is provided a method according to claim 1.

In particular, the hypervisor is configurable through the BIOS program. Namely, the BIOS program is provided with a configuration information which is then used as the allocation data of the hypervisor when the industrial PC (including the hypervisor) is started using the bootloader program. The hypervisor may thereby be flexibly configured and reconfigured. In particular, the hypervisor can be configured or reconfigured prior to a first use of the industrial PC or prior to subsequent uses. The (re)configuration of the hypervisor allows to adjust the amount of resources provided to the respective operating systems RTOS and GPOS, thereby for example optimizing the performance of the industrial PC.

The industrial PC (also referred to as "IPC" in the following) comprises a RTOS. The RTOS can be used to execute software under real-time operating system conditions, in particular within predetermined time constraints. The RTOS in particular processes application data as it comes in without buffering delays. Such an RTOS may be particularly useful in industrial environments and/or in the context of automation systems or automation networks, where applications to control field devices require minimal interrupt latencies, minimal buffering delays and minimal thread switching latencies of the operating system. For example, POSIX or other available real-time OS can be used as an RTOS.

On the other hand, IPCs can efficiently be manufactured and implemented to run GPOSs, such as Apple OS, Microsoft Windows or UNIX derivatives. GPOS refers to an operating system that has not necessarily a real-time data processing capability. In comparison to the RTOS, the GPOS in an IPC device may have larger buffering delays as application process data comes in or is generated. The RTOS is in particular implemented to provide low interrupt latency and low thread switching latency in comparison to the GPOS.

The GPOS and the RTOS share the same IPC hardware. Hardware resources (computational resources) respectively assigned to the GPOS and the RTOS can be managed by the hypervisor. The resources can include memory space, processors and/or processor cores. The hypervisor can also be referred to as a virtual machine monitor (VMM).

The allocation data indicate how much of which computational resources the hypervisor respectively allocates to the GPOS and the RTOS. For example, the allocation data may be a percentage indicating a share of the computational resources allocated to the RTOS (respectively to the GPOS). For example, 40% of all computational resources may be allocated to the GPOS, while the remaining 60% are allocated to the RTOS. The allocation data may be expressed as a balance between resources allocated to the RTOS and to the GPOS.

The IPC is further configured to run a BIOS program. The BIOS program may be firmware. The IPC may execute the BIOS program to get the computer system started once turned on. In particular, the BIOS program may perform an initialization of components of the IPC (for example including the hypervisor) during a booting process of the IPC. The bootloader program may be loaded by the BIOS program to load start programs and in particular to start the hypervisor.

The BIOS program may be modified by providing it with the configuration information. The configuration information may modify the code of the BIOS program depending on its contents. The configuration information can contain information corresponding to the allocation data of the hypervisor. In other word, the configuration information may be used to define the allocation data of the hypervisor.

The bootloader program boots the IPC such as to start the hypervisor with the allocation data corresponding to the configuration data provided to the BIOS program.

Thereby, the balance between resources for the RTOS and the GPOS can be flexibly adapted at installation time in order to optimize a performance of the IPC. In particular, by providing sufficient resources to the RTOS, the real-time execution of time-critical software can be guaranteed, while still providing the GPOS with sufficient resources for running the remaining non-critical programs. When the intended use of the IPC changes, the hypervisor may easily be reconfigured in terms of resource allocation. In particular, the reconfiguration of the hypervisor includes repeating the steps of the method according to the first aspect.

According to an embodiment, the configuration information is provided to the BIOS program by a user, and the method further comprises:
enabling the provision of the configuration information to the BIOS program by the user.

The user may be a user of the IPC, for example a technician or an engineer. He may provide the BIOS program with a configuration information which reflects the intended use of the IPC. For example, the user may provide the BIOS program with a configuration information through an interface of the IPC, for example via a touchscreen or the like.

The method further comprises:
running the RTOS and the GPOS with the hypervisor using the configuration information as the allocation data, wherein the hypervisor respectively provides the RTOS and the GPOS with the amount of computational resources defined in the configuration information.

At runtime, the IPC runs the RTOS and the GPOS in accordance with the allocation data set by the configuration data. Namely, the hypervisor provides the RTOS and the GPOS with the amount of computational resources defined by the allocation data of the hypervisor, which was set in accordance with the configuration information.

According to a further embodiment, the BIOS program includes a Unified Extensible Firmware Interface (UEFI) for providing the configuration information to the BIOS program.

According to a further embodiment,
the UEFI provides a plurality of configuration profiles which each include a different configuration information; wherein
the step of providing the BIOS program with a configuration information comprises a selection of one of the configuration profiles.

Each configuration profile may provide a different configuration information that is useable as allocation data. The provision of configuration profiles facilitates the selection and setting of the configuration information by the user since the user merely needs to select one of the profiles. In some embodiments, the profiles only indicate that more resources should be allocated to the GPOS or to the RTOS,

According to a further embodiment, the method further comprises:
authenticating the user providing the configuration information; and
allowing the provision of the BIOS program with the configuration data by the user only if the user has been authenticated successfully.

In particular, the user may only modify the BIOS program and provide it with the configuration data if he has previously been authenticated successfully. The authentication process may involve the verification of the identity of the user. For example, only authorized users may be successfully authenticated and thus be allowed to provide the configuration information. The authentication may improve the safety of the IPC because it can be avoided that unauthorized users and/or malicious persons modify the configuration of the hypervisor.

The method further comprises:
measuring an amount of computational resources used by the RTOS and/or by the GPOS during a runtime of the industrial PC; and
using the industrial PC, autonomously suggesting a configuration information to be set as the allocation data based on the measured amount of computational resources used by the RTOS and/or by the GPOS during the runtime of the industrial PC.

The IPC autonomously suggests a configuration information to be used as the allocation data based on the measured amount of used resources. "Autonomously" here in particular means without any input from a user. Autonomously suggesting a configuration information can be advantageous because this suggested configuration information is coordinated with the measured amount of used resources, thereby optimizing the resource allocation.

The measured amount of resources used by the RTOS and/or the GPOS is provided to the user of the IPC for him to determine the configuration information in accordance with the provided measured amount of resources.

The steps of measuring the amount of computational resources used by the RTOS and/or by the GPOS and of autonomously suggesting the configuration information include:
measuring an execution time for executing program code in real-time in the RTOS;
determining whether the measured execution time is greater than a predetermined threshold time;
if the measured execution time is greater than the predetermined threshold time, suggesting the configuration information to be set as the allocation data based on a divergence of the calculated execution time from the predetermined threshold time; and
if the measured execution time is not greater than the predetermined threshold time, maintaining a current configuration of the hypervisor.

In particular, the measured execution time may be an average execution time.

The amount of resources allocated to the RTOS may have an impact on the execution time of the real-time processes executed by the RTOS. When the RTOS does not execute the program code within a predetermined threshold time indicative of a sufficient rapid execution of code in real-time, the RTOS may not operate fast enough. In this case, an amount of resources provided to the RTOS may be smaller than required and the IPC may suggest a configuration information that correspondingly increases the amount of resources provided to the RTOS to guarantee the real-time operability. The predetermined threshold time may correspond to the predetermined time constraints for executing program code in real time with the RTOS.

The steps of measuring the amount of computational resources used by the RTOS and/or by the GPOS and of autonomously suggesting the configuration information to be set as the allocation data include:
measuring a throttling amount of the GPOS;
determining whether the measured throttling amount is greater than a predetermined throttling amount;
if the measured throttling amount is greater than the predetermined throttling amount, suggesting the configuration information to be set as the allocation data based on a divergence of the measured throttling amount from the predetermined throttling amount; and
if the measured throttling amount is not greater than the predetermined throttling amount, maintaining a current configuration of the hypervisor.

In particular, measuring the throttling amount of the GPOS allows measuring the performance of the GPOS. Throttling as used herein refers to memory throttling. Memory throttling in particular occurs when more memory than provided is required by the GPOS.

The throttling amount may be measured as described in the following. In detail, the used GPOS memory bandwidth in hardware can be monitored. If the GPOS consumes more bandwidth than configured by the hypervisor, the IPC may intervene by reducing the GPOS execution speed temporarily, for example by delaying the GPOS execution for a short moment. The IPC can then measure the amount of throttling by measuring the intervention count. Measuring the throttling amount may thus correspond to measuring performance reduction.

In particular, a degree to which the GPOS is throttling or not throttling is calculated. The ideal scenario would be that the GPOS performance is consistently below a predetermined throttling amount or threshold. If the measured throttling (averaged over time) is lower than the predetermined throttling amount, the current configuration of the hypervisor, including its allocation data, is correct in view of the application of the IPC and can be maintained unchanged. However, if the measured throttling is higher than the predetermined throttling amount, the current configuration of the hypervisor, including its allocation data, is modified to optimize the performance of the IPC. The value of the predetermined throttling amount may depend on the actual application performance reduction.

The step of autonomously suggesting the configuration information to be set as the allocation data comprises:
proposing the configuration information to be set as the allocation data to a user for validation and only setting the configuration information as the allocation data if the user validates the proposed configuration information; or
autonomously setting the configuration information as the allocation data.

In particular, the user confirms whether he agrees with the configuration information suggested by the IPC, thereby improving the flexibility of the hypervisor configuration.

According to a further embodiment, the autonomously suggested configuration information is one of the plurality of configuration profiles.

According to a further embodiment, the autonomously suggested configuration information is determined using an artificial intelligence (AI) algorithm.

The AI algorithm may be based on a machine-learning model, a deep learning model or a neural network model. The data used for performing the AI analysis can comprise earlier data from this IPC or from other IPCs which indicate a relationship between an amount of resources used by the RTOS and GPOS, an application field of the IPC, a configuration information set as the allocation data and/or a performance of the IPC. This data can for example be obtained from a cloud.

Using an AI algorithm to autonomously determine the suggested configuration information is advantageous because large amounts of earlier data can be used to optimize the determination of the suggested configuration information.

In some further embodiments, when the BIOS program is not provided with a configuration information, predefined initial allocation data are used as the allocation data of the hypervisor. The initial allocation data may be set by the manufacturer of the IPC.

According to a second aspect, a computer program product comprising a program code for executing the control method according to the first aspect or according to an embodiment thereof when executed on the industrial PC is provided.

The embodiments and features described with reference to the method of the first aspect or of an embodiment thereof apply mutatis mutandis to the computer program product of the second aspect.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

In particular, the present computer program product includes a configurable BIOS program, as described above.

According to a third aspect, an industrial PC is provided according to claim 3.

The embodiments and features described with reference to the method of the first aspect or of an embodiment thereof apply mutatis mutandis to the industrial PC of the third aspect.

According to an embodiment, the industrial PC according to the third aspect is configured to execute the method according to the first aspect or according to an embodiment thereof.

Further embodiments, features and advantages of the present invention will become apparent from the subsequent description and dependent claims, taken in conjunction with the accompanying drawings, in which:
- Fig. 1: shows an industrial PC according to a first embodiment;
- Fig. 2: shows a method for configuring a hypervisor in an industrial PC according to a first embodiment;
- Fig. 3: shows a method for configuring a hypervisor in an industrial PC according to a second embodiment;
- Fig. 4: shows a method for configuring a hypervisor in an industrial PC according to a third embodiment;
- Fig. 5: shows an industrial PC according to a second embodiment;
- Fig. 6: shows a method for configuring a hypervisor in an industrial PC according to a fourth embodiment;
- Fig. 7: shows a method for configuring a hypervisor in an industrial PC according to a fifth embodiment;
- Fig. 8: shows a method for configuring a hypervisor in an industrial PC according to a sixth embodiment;
- Fig. 9: shows an example of data collected to measure RTOS performance;
- Fig. 10: shows an example of the impact of the resource allocation on the performance and predictability of an IPC.

In the Figures, like reference numerals designate like or functionally equivalent elements, unless otherwise indicated.

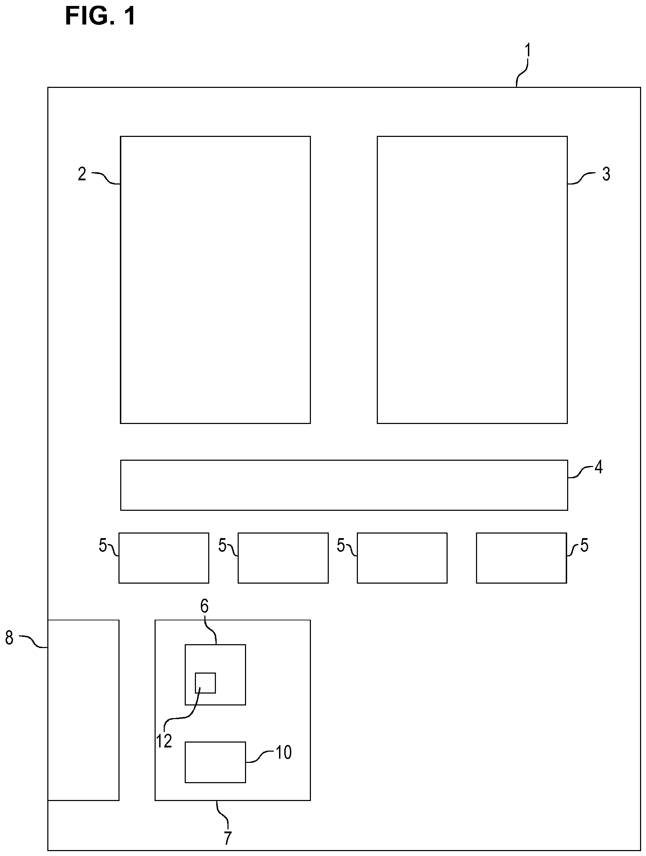

Fig. 1 shows an industrial PC (IPC) 1 according to a first embodiment. The IPC 1 comprises a RTOS 2, a GPOS 3, a hypervisor 4 including allocation data 11, processor cores 5, a program storage unit 7 with a BIOS program 6 and a bootloader program 10 and an interface unit 8.

The IPC 1 is intended for an industrial automation system and includes several PC technology aspects working independently together. The RTOS 2 and the GPOS 3 run independently from each other as guest machines on the IPC 1 as a host. The hypervisor 4, which can be implemented as computer software, firmware or hardware, creates and runs the virtual machines, i.e. the RTOS 2 and the GPOS 3. The hypervisor 4 or virtual machine monitor manages the execution of the guest operating systems GPOS 3 and RTOS 2. The IPC 1 provides several hardware computational resources, such as the processor cores 5. The hypervisor 4 thus provides virtualized hardware resources of the IPC device 1 to the guest operating systems 2, 3. The amount of computational resources 5, 9 respectively allocated to the RTOS 2 and the GPOS 3 is defined by the allocation data 11 provided in the hypervisor 4.

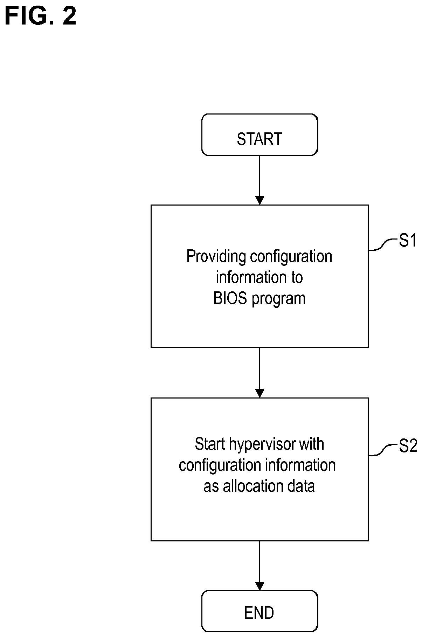

The IPC 1 of Fig. 1 is configured to perform a method for configuring the hypervisor 4. Such a method is for example shown in Fig. 2, which shows a method for configuring a hypervisor 4 in an industrial PC 1 according to a first embodiment.

In a step S1 of Fig. 2, the configuration information 12 is provided to the BIOS program 6. In the example of Fig. 1, the configuration information 12 is provided to the BIOS program 6 by a user through the interface unit 8, which is here a UEFI BIOS 8. The UEFI BIOS 8 is accessed by the user via a touchscreen, through which the user can access the different options of the UEFI BIOS 8. The provision of the configuration information 12 here involves the selection of a configuration profile shown on the UEFI BIOS 8, each profile corresponding to a different configuration information 12.

The configuration information 12 is information for modifying the resource allocation to the RTOS 2 and GPOS 3 by the hypervisor 4. The configuration information 12 may be used to modify the configuration of the hypervisor 4 by adapting the allocation data 11 accordingly. In the present example, the configuration information 12 indicates that three processor cores 5 are for use by the GPOS 3 while one is for use by the RTOS 2.

In a step S2 of Fig. 2, the BIOS program 6 loads the bootloader program 10 such as to start the hypervisor 4 with the configuration information 12 set as the allocation data 11. Thus, the configuration of the hypervisor 4 is modified based on the configuration information 12 provided by the user.

In a further step (which is not shown on Fig. 2), during a runtime of the IPC 1, the hypervisor 4 allocates resources 5, 9 to the GPOS 3 and the RTOS 2 in accordance with the configuration information 12 provided by the user in step S1 and set as the allocation data 11 in step S2.

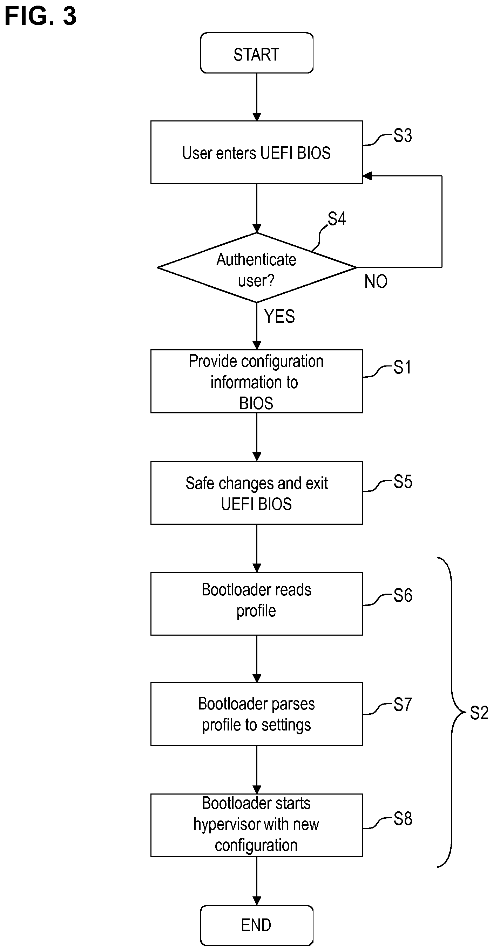

Fig. 3 shows a method for configuring a hypervisor 4 in an industrial PC 1. The IPC 1 of Fig. 1 can be implemented to perform the method of Fig. 3.

Beyond the steps S1 and S2 of the method according to the first embodiment (Fig. 2), the method of the second embodiment (Fig. 3) includes the steps S3 - S8. In detail, in a step S3, the user enters the UEFI BIOS 8. In a step S4, the user is authenticated, i.e. his identity is verified. If the authentication of the user of step S4 is successful, step S1 is performed. Alternatively, if the authentication of the user of step S4 is not successful, step S3 is repeated.

After step S1 described in view of Fig. 2, in step S5 of Fig. 3, the user saves his changes to the configuration information 12 in a non-volatile random access memory (NVRAM) and exits the UEFI BIOS 8. Steps S6 - S8 jointly correspond to step S2 described in view of Fig. 2. In detail, in step S6, the bootloader program 10 reads the configuration profile set as the configuration information 12 by the user in step S1. Then, in step S7, the bootloader 10 parses the configuration profile to a combination of settings of the hypervisor 4. Then, in a step S8, the bootloader 10 starts the hypervisor 4 with a new configuration in agreement with the selected configuration information 12.

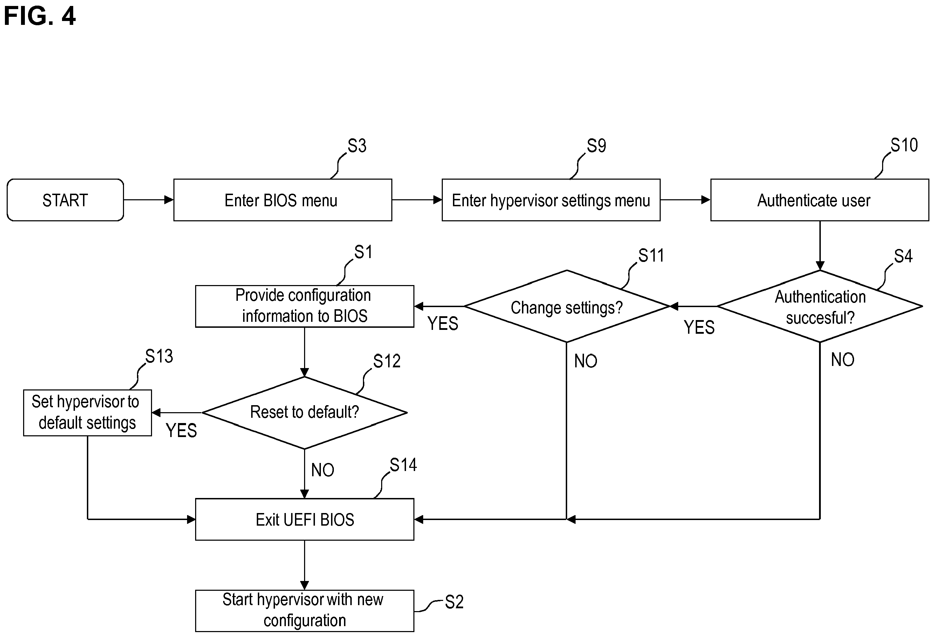

Fig. 4 shows a method for configuring a hypervisor 4 in an industrial PC 1. The IPC 1 of Fig. 1 can be implemented to perform the method of Fig. 4. Globally, the method of Fig. 4 corresponds to the method described in view of Fig. 3, but focusses on how the selection tool of the UEFI BIOS 8 functions. Steps S1 - S4 of Fig. 4 are identical with steps S1 - S4 described in view of Fig. 3 above.

In detail, after the step S3 which is identical to step S3 of Fig. 3, the user enters the hypervisor's settings menu on the UEFI BIOS 8 by touching a corresponding portion on the touchscreen (step S9 in Fig. 4). Then, in step S10, the user is authenticated and if the authentication is successful in step S4, the UEFI BIOS 8 identifies whether settings are changed, i.e. if a new configuration information 12 is entered by the user (step S11). If so, the configuration information 12 is provided to the BIOS program 6 in step S1.

Then, in step S12 of Fig. 4, it is verified whether the user resets the hypervisor's 4 settings to default. If so, the configuration information 12 is set to the hypervisor's 4 default settings in a step S13. After step S13, if the configuration information 12 is not reset to default in Fig. 4, if the user does not change any settings in step S11 or if the authentication of step S4 is not successful, the UEFI BIOS 8 is exited in step S14 of Fig. 4. Finally, the bootloader 10 starts the hypervisor 4 with the new configuration information 12 as the allocation data 11 in step S2, which was already described above.

The IPC 1' includes a disk drive 13 holding the GPOS 3, which is here Windows 10. The disk drive 13 further includes a boot partition 14 for booting the IPC 1' including the RTOS 2, a GPOS boot manager 15 for managing the booting of the GPOS 3, the hypervisor 4 and the bootloader program 10.

The IPC 1' further comprises a chipset 16 including the UEFI BIOS 8 having a hypervisor configuration driver 17 and holding Extensible Firmware Interface (EFI) variables. The hypervisor configuration driver 17 is the part of the UEFI BIOS 8 which interacts with the user, namely suggests the configuration profiles, is provides with the configuration information 12 and the like. The configuration information is then stored in the EFI variables 18 when the UEFI BIOS 8 is exited.

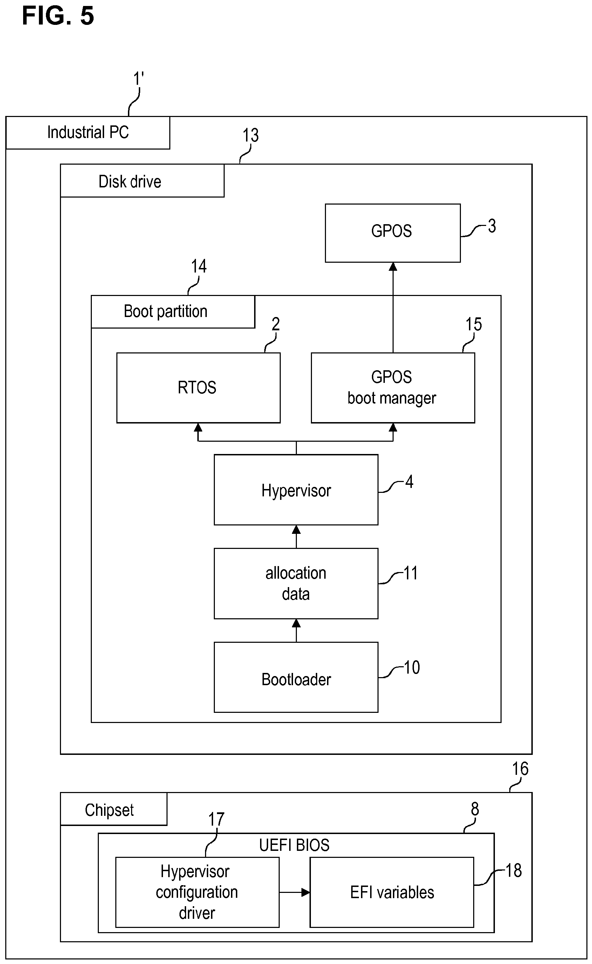

As shown in Fig. 5, the bootloader program 10 provides the hypervisor 4 with the allocation data 11 in accordance with configuration data read from the EFI variables 18 during booting.

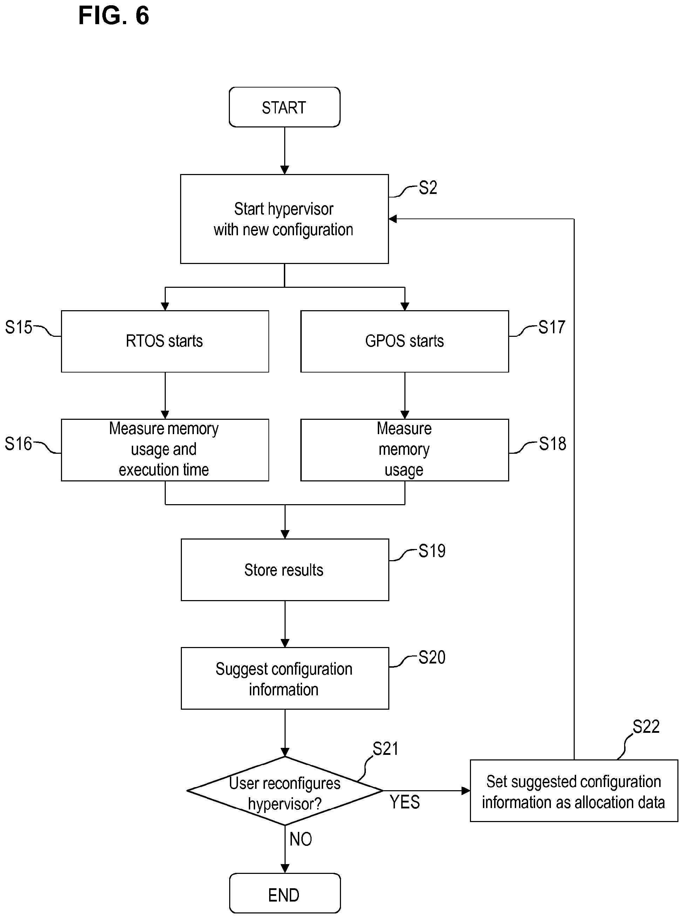

Fig. 6 shows a method for configuring a hypervisor 4 in an industrial PC 1, 1' which can be implemented on the IPCs 1 and 1' of Fig. 1 and 5.

The steps of the method of the fourth embodiment is performed after the step S2, in which the hypervisor 4 is started with a new configuration based on the configuration information 12 set as the allocation data 11.

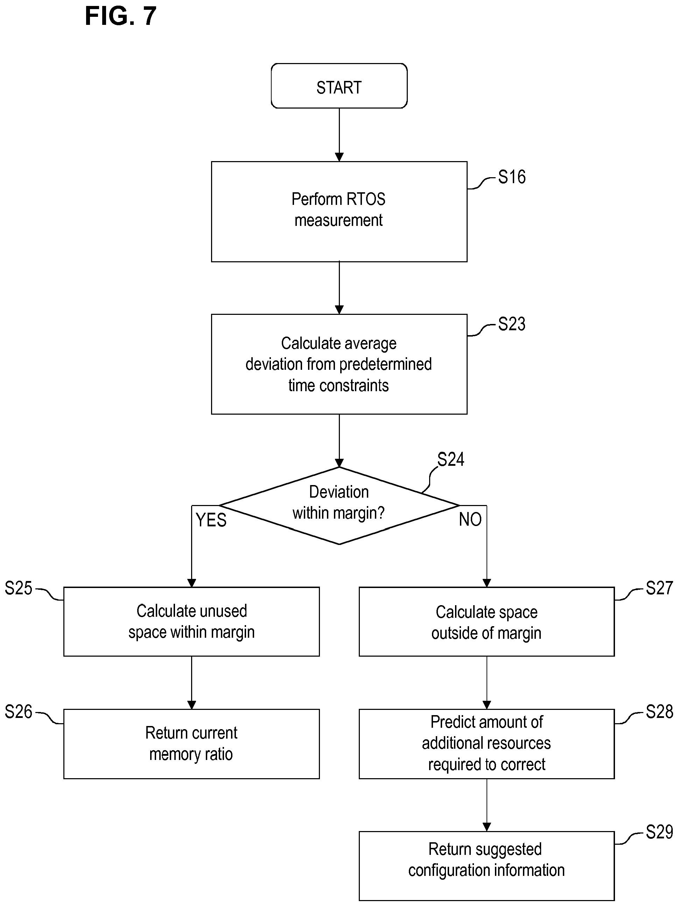

Namely, in a step S15 shown in Fig. 6, the RTOS 2 starts and executes critical programs in real time within predetermined time constraints. In a step S16, a memory usage, a predictability (which is an information about whether the time to complete a task is consistent) and/or an execution time of the RTOS 2 are measured periodically. In step S16, an algorithm is further used to estimate, based on the measurements of step S16, how many resources can be added or removed from the RTOS 2 before the predictability falls below a predetermined threshold. This will be described in more detail in view of Fig. 7 below.

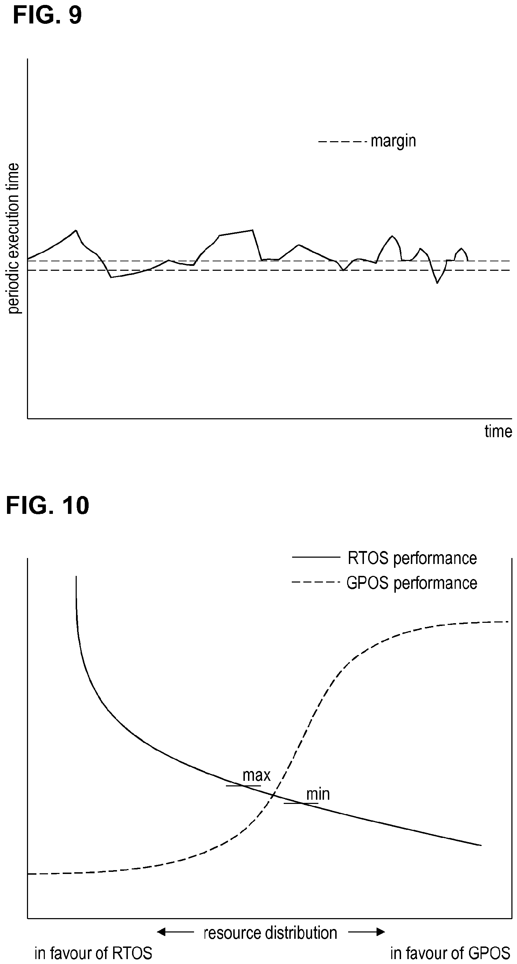

Fig. 9 shows an example of a determination performed at step S16. In detail, Fig. 9 shows an example of data collected to measure RTOS 2 performance. Namely, Fig. 9 indicates a periodic execution time of real-time programs as a function of time.

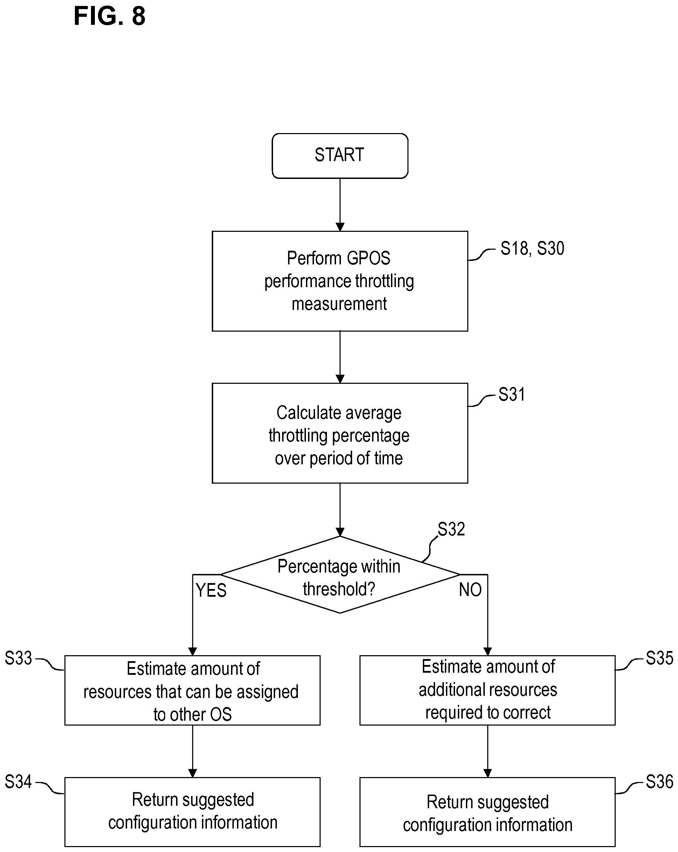

In parallel, in a step S17 shown in Fig. 6, the GPOS 3 starts and executes non-critical programs without predetermined time constraints. In a step S18, a memory usage relative to an available memory of the GPOS 3 is measured periodically. In step S18, an algorithm is further used to estimate, based on the measurements of step S18, whether more or less memory is required for the GPOS 3. This will be described in more detail in view of Fig. 8 below.

In a step S19, the results from the steps S16 and S18 are stored, for example as raw data and in histograms. In a step S20, the IPC 1, 1' autonomously suggests a new configuration information 12 for configuring the hypervisor 4 based on the stored results.

In step S21, it is determined whether the user wishes to reconfigure the hypervisor 4, for example by asking the user via the interface 8. If he wants to reconfigure the hypervisor 4, in step S22, the suggested configuration information is used as the allocation data 11 of the hypervisor 4 (step S2). If the user does not want to reconfigure the hypervisor 4 in step S21, the hypervisor 4 is not reconfigured.

Fig. 7 shows a method for configuring a hypervisor 4 in an industrial PC 1, 1' which can be implemented on the IPCs 1 and 1' of Fig. 1 and 5.

In detail, Fig. 7 shows the steps of determining an optimized configuration information 12 for the RTOS 2. After performing the already described step S16, the average deviation of the execution time from the predetermined time constraints is calculated in step S23. In step S24, it is determined whether the deviation falls within a predetermined margin (indicated with a dashed line in Fig. 9). For example, the deviation falls within the predetermined margin if no more than 10% of the execution times take more than 90% of the average execution time. If the deviation falls within the predetermined margin, unused memory space within the margin is determined in step S25 and the current memory ratio is returned to the user in step S26 and/or stored in the IPC 1, 1'. Alternatively, if the deviation does not fall within the predetermined margin in step S24, the memory space outside the margin is calculated in step S27. In step S28, the amount of additional resources 5, 9 required by the RTOS to correct the deviation is determined based on the space outside of the margin determined in step S27. In a step S29, the IPC 1, 1' returns a suggested configuration information 12 or at least part thereof indicating how to redistribute the resources of the RTOS 2 so that the RTOS 2 satisfies the real-time requirements. Fig. 8 shows a method for configuring a hypervisor 4 in an industrial PC 1, 1' which can be implemented on the IPCs 1 and 1' of Fig. 1 and 5.

In detail, Fig. 8 shows the steps of determining an optimized configuration information 12 for the GPOS 3. In the example of Fig. 8, the measurement of the performances of the GPOS 3 of step S18 includes performing a performance throttling measurement. In detail, the GPOS 3 performance is measured by collecting data regarding the cache throttling by running a benchmark on the GPOS 3. After collecting enough measurement data, an algorithm is used to calculate the degree to which the GPOS 3 is throttling or not throttling. The ideal scenario would be that the GPOS 3 performance is consistently below a predetermined throttling amount (also referred to as "predetermined throttling threshold").

In a step S31, an average throttling percentage over time period is determined. If the percentage is within a throttling threshold ("yes" in step S32), the amount of spare resources which can be assigned to other operating systems 2 without exceeding the threshold is estimated based on the throttling percentage calculated in step S31. In step S34, the IPC 1, 1' returns a suggested configuration information or at least part thereof indicating how to redistribute the resources of the GPOS 3 so as to optimize the performance of the IPC 1, 1'. Alternatively, if the percentage is not within a threshold ("no" in step S32), the amount of additional resources requires to correct the percentage to fall within the threshold is estimated based on the throttling percentage calculated in step S31. Then, in a step S36, the IPC 1, 1' returns a suggested configuration information or at least part thereof indicating how to redistribute the resources of the GPOS 3 so as to optimize the performance of the IPC 1, 1'.

Fig. 10 shows an exaggerated example of the impact of the resource allocation on the performance and predictability of an IPC 1, 1'. When measurement data for the performance of the RTOS 2 and the GPOS 3 are both obtained (steps S16 and S18 and Fig. 9), a suitable configuration information 12 can be determined. The minimum bar in Fig. 10 ("min") indicates a minimum amount of resource which is always set available to the RTOS 2 since maintaining the RTOS predictability is always more important than increasing GPOS 3 performance. Facultatively, a maximum ("max") is also set to guarantee a certain GPOS 3 performance. Looking at Fig. 10, an ideal point can be found where the desired GPOS 3 performance can be achieved while not sacrificing too much RTOS 2 predictability.

The IPC 1, 1' may use the graph of Fig. 10 to autonomously determine the suggested configuration information 12. Alternatively, the IPC 1, 1' may display the graph of Fig. 10 to the user for him to select the configuration information 12.

Other algorithms can be used to autonomously determine the configuration information 12. Such algorithms may include AI algorithms. The resource distribution to the RTOS 2 and the GPOS 3 can be different from that provided by the configuration information 12 defined above.

### REFERENCE NUMERALS

- 1, 1': industrial PC
- 2: RTOS
- 3: GPOS
- 4: hypervisor
- 5: processor core
- 6: BIOS program
- 7: Program storage unit
- 8: interface unit
- 10: bootloader program
- 11: allocation data
- 12: configuration information
- 13: disk drive
- 14: boot partition
- 15: boot manager
- 16: chipset
- 17: hypervisor configuration driver
- 18: EFI variables
- S1 - S36: method steps

## Claims

1. A method for configuring a hypervisor (4) in an industrial PC (1, 1'), the industrial PC (1, 1') comprising:
a real-time operating system (RTOS) (2) for executing program code in real time within predetermined time constraints;
a general-purpose operating system (GPOS) (3) for executing program code without time constraints; and
the hypervisor (4) for running the RTOS (2) and the GPOS (3) and for defining an allocation data (11) indicating an amount of hardware resources (5, 9) allocated to the RTOS (2) and the GPOS (3), wherein the hypervisor (4) is configurable through a basic input/output system (BIOS) program (6) being provided with a configuration information which is then used as the allocation data (11) of the hypervisor (4) when the industrial PC (1, 1') including the hypervisor (4) is started using a bootloader program (10);
the method comprising:
providing (S1) the basic input/output system (BIOS) program (6) for performing an initialization of components of the industrial PC (1, 1') during a booting process of the industrial PC (1, 1') with a configuration information (12) to be set as the allocation data (11);
loading (S2) a bootloader program (10) using the BIOS program (6) such as to start the hypervisor (4) with the configuration information (12) set as the allocation data (11); and
running the RTOS (2) and the GPOS (3) with the hypervisor (4) using the configuration information (12) as the allocation data (11), wherein the hypervisor (4) respectively provides the RTOS (2) and the GPOS (3) with the amount of hardware resources (5, 9) defined in the configuration information (12);
method further comprising:
measuring (S16, S18) an amount of hardware resources (5, 9) used by the RTOS (2) and by the GPOS (3) during a runtime of the industrial PC (1, 1'); and
using the industrial PC (1, 1'), autonomously suggesting (S20, S29, S34, S36) a configuration information (12) to be set as the allocation data (11) based on the measured amount of hardware resources (5, 9) used by the RTOS (2) and by the GPOS (3) during the runtime of the industrial PC (1, 1');
wherein the steps of measuring (S16) the amount of hardware resources (5, 9) used by the RTOS (2) and of autonomously suggesting the configuration information (12) include:
measuring an execution time for executing program code in real-time in the RTOS (2);
determining (S23) whether the measured execution time is greater than a predetermined threshold time;
if the measured execution time is greater than the predetermined threshold time, suggesting (S29) the configuration information (12) to be set as the allocation data (11) based on a divergence of the calculated execution time from the predetermined threshold time; and
if the measured execution time is not greater than the predetermined threshold time, maintaining a current configuration of the hypervisor (4);
wherein the steps of measuring (S18) the amount of hardware resources (5, 9) used by the GPOS (3) and of autonomously suggesting the configuration information (12) to be set as the allocation data (11) include:
measuring a cache throttling amount of the GPOS (3);
determining whether the measured cache throttling amount is greater than a predetermined cache throttling amount;
if the measured cache throttling amount is greater than the predetermined throttling amount, suggesting the configuration information (12) to be set as the allocation data (11) based on a divergence of the measured cache throttling amount from the predetermined cache throttling amount; and
if the measured cache throttling amount is not greater than the predetermined cache throttling amount, maintaining a current configuration of the hypervisor (4);
wherein the step of autonomously suggesting the configuration information (12) to be set as the allocation data (11) comprises:
proposing the configuration information (12) to be set as the allocation data (11) to a user for validation and only setting the configuration information (12) as the allocation data (11) if the user validates the proposed configuration information (12); or
autonomously setting the configuration information (12) as the allocation data (11).

2. A computer program product comprising a program code for executing the method according to claim 1 when executed on the industrial PC (1, 1').

3. An industrial PC (1, 1') comprising:
a real-time operating system (RTOS) (2) for executing program code in real time within predetermined time constraints;
a general-purpose operating system (GPOS) (3) for executing program code without time constraints; and
the hypervisor (4) for running the RTOS (2) and the GPOS (3) and for defining an allocation data (11) indicating an amount of hardware resources (5, 9) allocated to the RTOS (2) and the GPOS (3);
the industrial PC (1, 1') being configured to: execute the method according to claim 1.

4. The industrial PC according to claim 3, wherein the hypervisor (4) is configured to assign hardware resources (5, 9) to the RTOS (2) and the GPOS (3) in accordance with the set allocation data (11).

5. The industrial PC according to claim 3 or 4, further including a user interface for obtaining the configuration information (12) from the user and providing it to the BIOS program (6).

## Patentansprüche

1. Verfahren zum Konfigurieren eines Hypervisors (4) in einem industriellen PC (1, 1'), wobei der industrielle PC (1, 1') Folgendes aufweist:
ein Echtzeit-Betriebssystem (RTOS - real-time OS) (2) zum Ausführen von Programmcode in Echtzeit innerhalb vorbestimmter Zeitbeschränkungen;
ein Mehrzweck-Betriebssystem (GPOS - general-purpose OS) (3) zum Ausführen von Programmcode ohne Zeitbeschränkungen; und
den Hypervisor (4) zum Ausführen des RTOS (2) und des GPOS (3) und zum Definieren von Zuweisungsdaten (11), die eine Menge von Hardwareressourcen (5, 9) angeben, die dem RTOS (2) und dem GPOS (3) zugewiesen sind, wobei der Hypervisor (4) durch ein BIOS (Basic Input/Output)-Programm (6) konfigurierbar ist, das mit Konfigurationsinformationen versehen ist, die dann als die Zuweisungsdaten (11) des Hypervisors (4) verwendet werden, wenn der industrielle PC (1, 1'), der den Hypervisor (4) aufweist, unter Verwendung eines Bootloader-Programms (10) gestartet wird;
wobei das Verfahren Folgendes aufweist:
Versehen (S1) des BIOS (Basic Input/Output OS)-Programms (6) zum Durchführen einer Initialisierung von Komponenten des industriellen PCs (1, 1') während eines Bootvorgangs des industriellen PC (1, 1') mit Konfigurationsinformationen (12), die als die Zuweisungsdaten (11) einzustellen sind;
Laden (S2) eines Bootloader-Programms (10) unter Verwendung des BIOS-Programms (6), um den Hypervisor (4) mit den Konfigurationsinformationen (12) zu starten, die als die Zuweisungsdaten (11) eingestellt sind; und
Ausführen des RTOS (2) und des GPOS (3) mit dem Hypervisor (4) unter Verwendung der Konfigurationsinformationen (12) als die Zuweisungsdaten (11), wobei der Hypervisor (4) dem RTOS (2) bzw. dem GPOS (3) die Menge von Hardwareressourcen (5, 9) bereitstellt, die in den Konfigurationsinformationen (12) definiert sind;
wobei das Verfahren ferner Folgendes aufweist:
Messen (S16, S18) einer Menge von Hardwareressourcen (5, 9), die durch das RTOS (2) und durch das GPOS (3) während einer Laufzeit des industriellen PC (1, 1') verwendet werden; und
unter Verwendung des industriellen PC (1, 1') autonomes Vorschlagen (S20, S29, S34, S36) von Konfigurationsinformationen (12), die als die Zuweisungsdaten (1 1) einzustellen sind, basierend auf der gemessenen Menge von Hardwareressourcen (5, 9), die durch das RTOS (2) und durch das GPOS (3) während der Laufzeit des industriellen PC (1, 1') verwendet werden;
wobei die Schritte des Messens (S16) der Menge von Hardwareressourcen (5, 9), die durch das RTOS (2) verwendet werden, und des autonomen Vorschlagens der Konfigurationsinformationen (12) Folgendes aufweisen:
Messen einer Ausführungszeit zum Ausführen von Programmcode in Echtzeit in dem RTOS (2);
Bestimmen (S23), ob die gemessene Ausführungszeit größer als eine vorbestimmte Schwellenzeit ist;
wenn die gemessene Ausführungszeit größer als die vorbestimmte Schwellenzeit ist, Vorschlagen (S29) der Konfigurationsinformationen (12), die als die Zuweisungsdaten (11) einzustellen sind, basierend auf einer Abweichung der berechneten Ausführungszeit von der vorbestimmten Schwellenzeit; und
wenn die gemessene Ausführungszeit nicht größer als die vorbestimmte Schwellenzeit ist, Beibehalten einer aktuellen Konfiguration des Hypervisors (4);
wobei die Schritte des Messens (S18) der Menge von Hardwareressourcen (5, 9), die durch das GPOS (3) verwendet werden, und des autonomen Vorschlagens der Konfigurationsinformationen (12), die als die Zuweisungsdaten (1 1) einzustellen sind, Folgendes aufweisen:
Messen eines Cache-Drosselungsbetrags des GPOS (3);
Bestimmen, ob der gemessene Cache-Drosselungsbetrag größer als ein vorbestimmter Cache-Drosselungsbetrag ist;
wenn der gemessene Cache-Drosselungsbetrag größer als der vorbestimmte Drosselungsbetrag ist, Vorschlagen der Konfigurationsinformationen (12), die als die Zuweisungsdaten (11) einzustellen sind, basierend auf einer Abweichung des gemessenen Cache-Drosselungsbetrags von dem vorbestimmten Cache-Drosselungsbetrag; und
wenn der gemessene Cache-Drosselungsbetrag nicht größer als der vorbestimmte Cache-Drosselungsbetrag ist, Beibehalten einer aktuellen Konfiguration des Hypervisors (4);
wobei der Schritt des autonomen Vorschlagens der Konfigurationsinformationen (12), die als die Zuweisungsdaten (11) einzustellen sind, Folgendes aufweist:
Vorschlagen der Konfigurationsinformationen (12), die als die Zuweisungsdaten (11) einzustellen sind, für einen Benutzer zur Validierung und nur Einstellen der Konfigurationsinformationen (12) als die Zuweisungsdaten (11), wenn der Benutzer die vorgeschlagenen Konfigurationsinformationen (12) validiert; oder
autonomes Einstellen der Konfigurationsinformationen (12) als die Zuweisungsdaten (11).

2. Computerprogrammprodukt, das einen Programmcode zum Ausführen des Verfahrens nach Anspruch 1 aufweist, wenn er auf dem industriellen PC (1, 1') ausgeführt wird.

3. Industrieller PC (1, 1'), der Folgendes aufweist:
ein Echtzeit-Betriebssystem (RTOS - real-time OS) (2) zum Ausführen von Programmcode in Echtzeit innerhalb vorbestimmter Zeitbeschränkungen;
ein Mehrzweck-Betriebssystem (GPOS - general-purpose OS) (3) zum Ausführen von Programmcode ohne Zeitbeschränkungen; und
den Hypervisor (4) zum Ausführen des RTOS (2) und des GPOS (3) und zum Definieren von Zuweisungsdaten (11), die eine Menge von Hardwareressourcen (5, 9) angeben, die dem RTOS (2) und dem GPOS (3) zugewiesen sind;
wobei der industrielle PC (1, 1') konfiguriert ist zum: Ausführen des Verfahrens nach Anspruch 1.

4. Industrieller PC nach Anspruch 3, wobei der Hypervisor (4) konfiguriert ist, Hardwareressourcen (5, 9) dem RTOS (2) und dem GPOS (3) gemäß den eingestellten Zuweisungsdaten (11) zuzuweisen.

5. Industrieller PC nach Anspruch 3 oder 4, der ferner eine Benutzerschnittstelle zum Erhalten der Konfigurationsinformationen (12) von dem Benutzer und zum Bereitstellen derselben für das BIOS-Programm (6) aufweist.

## Revendications

1. Procédé pour configurer un hyperviseur (4) dans un PC industriel (1, 1'), le PC industriel (1, 1') comprenant :
un système d'exploitation en temps réel (RTOS) (2) destiné à exécuter un code de programme en temps réel avec des contraintes de temps prédéterminées ;
un système d'exploitation universel (GPOS) (3) destiné à exécuter un code de programme sans contrainte de temps ; et
l'hyperviseur (4) destiné à lancer le RTOS (2) et le GPOS (3) et à définir des données d'attribution (11) indiquant une quantité de ressources matérielles (5, 9) attribuées au RTOS (2) et au GPOS (3), dans lequel l'hyperviseur (4) peut être configuré par l'intermédiaire d'un programme de système d'entrée/sortie de base (BIOS) (6) qui contient des informations de configuration qui sont ensuite utilisées en tant que les données d'attribution (11) de l'hyperviseur (4) lorsque le PC industriel (1, 1') comprenant l'hyperviseur (4) est démarré au moyen d'un programme d'amorçage (10) ;
le procédé comprenant les étapes consistant à :
utiliser (S1) le programme de système d'entrée/sortie de base (BIOS) (6) pour mettre en oeuvre une initialisation de composantes du PC industriel (1, 1') pendant un traitement d'amorçage du PC industriel (1, 1') avec des informations de configuration (12) à définir en tant que les données d'attribution (11) ;
charger (S2) un programme d'amorçage (10) au moyen du programme de BIOS (6) de façon à démarrer l'hyperviseur (4) avec les informations de configuration (12) définies en tant que les données d'attribution (11) ; et
lancer le RTOS (2) et le GPOS (3) avec l'hyperviseur (4) au moyen des informations de configuration (12) en tant que les données d'attribution (11), dans lequel l'hyperviseur (4) fournit respectivement au RTOS (2) et au GPOS (3) la quantité de ressources matérielles (5, 9) définie dans les informations de configuration (12) ;
le procédé comprenant en outre les étapes consistant à :
mesurer (S16, S18) une quantité de ressources matérielles (5, 9) utilisées par le RTOS (2) et par le GPOS (3) pendant un temps d'exécution du PC industriel (1, 1') ; et
au moyen du PC industriel (1, 1'), suggérer de manière autonome (S20, S29, S34, S36) des informations de configuration (12) à définir en tant que les données d'attribution (11) sur la base de la quantité mesurée de ressources matérielles (5, 9) utilisées par le RTOS (2) et par le GPOS (3) pendant le temps d'exécution du PC industriel (1, 1') ;
dans lequel les étapes de mesure (S16) de la quantité de ressources matérielles (5, 9) utilisées par le RTOS (2) et de suggestion autonome des informations de configuration (12) consistent à :
mesurer un temps d'exécution pour exécuter un code de programme en temps réel dans le RTOS (2) ;
déterminer (S23) si le temps d'exécution mesuré est supérieur à un temps seuil prédéterminé ;
si le temps d'exécution mesuré est supérieur au temps seuil prédéterminé, suggérer (S29) les informations de configuration (12) à définir en tant que les données d'attribution (11) sur la base d'une divergence du temps d'exécution calculé par rapport au temps seuil prédéterminé ; et
si le temps d'exécution mesuré n'est pas supérieur au temps seuil prédéterminé, maintenir une configuration courante de l'hyperviseur (4) ;
dans lequel les étapes de mesure (S18) de la quantité de ressources matérielles (5, 9) utilisées par le GPOS (3) et de suggestion autonome des informations de configuration (12) à définir en tant que les données d'attribution (11) consistent à :
mesurer une quantité de ralentissement de mémoire cache du GPOS (3) ;
déterminer si la quantité de ralentissement de mémoire cache mesurée est supérieure à une quantité de ralentissement de mémoire cache prédéterminée ;
si la quantité de ralentissement de mémoire cache mesurée est supérieure à la quantité de ralentissement prédéterminée, suggérer les informations de configuration (12) à définir en tant que les données d'attribution (11) sur la base d'une divergence de la quantité de ralentissement de mémoire cache mesurée par rapport à la quantité de ralentissement de mémoire cache prédéterminée ; et
si la quantité de ralentissement de mémoire cache mesurée n'est pas supérieure à la quantité de ralentissement de mémoire cache prédéterminée, maintenir une configuration courante de l'hyperviseur (4) ;
dans lequel l'étape de suggestion autonome des informations de configuration (12) à définir en tant que les données d'attribution (11) consiste à :
proposer les informations de configuration (12) à définir en tant que les données d'attribution (11) à un utilisateur à des fins de validation et ne définir les informations de configuration (12) en tant que les données d'attribution (11) que si l'utilisateur valide les informations de configuration proposées (12) ; ou
définir de manière autonome les informations de configuration (12) en tant que les données d'attribution (11).

2. Produit-programme informatique comprenant un code de programme destiné à exécuter le procédé selon la revendication 1 lorsqu'il est exécuté sur le PC industriel (1, 1').

3. PC industriel (1, 1'), comprenant :
un système d'exploitation en temps réel (RTOS) (2) destiné à exécuter un code de programme en temps réel avec des contraintes de temps prédéterminées ;
un système d'exploitation universel (GPOS) (3) destiné à exécuter un code de programme sans contrainte de temps ; et
l'hyperviseur (4) destiné à lancer le RTOS (2) et le GPOS (3) et à définir des données d'attribution (11) indiquant une quantité de ressources matérielles (5, 9) attribuées au RTOS (2) et au GPOS (3) ;
le PC industriel (1, 1') étant configuré pour exécuter le procédé selon la revendication 1.

4. PC industriel selon la revendication 3, dans lequel l'hyperviseur (4) est configuré pour attribuer des ressources matérielles (5, 9) au RTOS (2) et au GPOS (3) conformément aux données d'attribution définies (11).

5. PC industriel selon la revendication 3 ou la revendication 4, comprenant en outre une interface utilisateur destinée à obtenir les informations de configuration (12) de l'utilisateur et à les fournir au programme de BIOS (6).
